# EUROPEAN PATENT APPLICATION

(11) **EP 3 920 541 A1**
(43) Date of publication of application: **08.12.2021**
(21) Application number: 20177966.7
(22) Date of filing: 03.06.2020
(51) Int. Cl.: H04N 21/44, H04H 60/33, H04H 60/59, H04N 21/442

(54) **METHOD FOR OBTAINING TELEVISION RATING POINTS FOR TELEVISION CHANNELS**

(71) Applicant: Top Victory Investments Limited, Kwun Tong, Kowloon 999077 (HK)
(72) Inventor: BAIG, Azmathulla, Bangalore (IN); KK, Amruth, Bangalore (IN)
(74) Representative: V.O.

(57) **Abstract**

A method for obtaining television rating points for television channels is proposed. A television (2) is used to periodically capture an image of part of a frame that is currently displayed thereby, where the image thus captured contains a channel logo contained in the part of the frame. The television (2) determines (S23) whether the channel logo contained in the image matches any one of multiple predefined channel logos. If affirmative, the television (2) transmits (S25) identification information that indicates a television channel corresponding to the matched one of the predefined channel logos to a server (1) for subsequent computation of television rating points.

## Description

The disclosure relates to a method for obtaining television rating points for television channels.

Television Rating Point (TRP) is a tool provided to judge which television (TV) programs are viewed the most. This serves as a guidance for people's selection of programs and also provides information on the popularity of a particular channel. Conventionally, people meters are attached to TV sets in a few thousand viewers' houses for data collection purposes. The people meter records the program that a viewer watches and the time of watching for calculating the TRP. The data collected by the people meters are treated as samples for the overall TV-owning population in the various geographical and demographic sectors. Since the people meters are installed in only a relatively small number of houses, the TRP thus obtained may not be sufficiently accurate.

Therefore, an object of the disclosure is to provide a method for obtaining television rating points for television channels. The television rating points thus obtained may have higher accuracy.

According to the disclosure, the method includes: by a television, downloading channel logo information from a server that is communicatively coupled to the television via a communication network, the channel logo information containing information related to multiple predefined channel logos that respectively correspond to multiple television channels; by the television, periodically capturing an image of part of a frame that is currently displayed thereby, the image thus captured containing a channel logo contained in the part of the frame; by the television, determining whether the channel logo contained in the image matches any one of the predefined channel logos based on the channel logo information; and by the television, upon determining that the channel logo contained in the image matches one of the predefined channel logos, making one of the television channels that corresponds to the matched one of the predefined channel logos serve as an identified television channel, and transmitting identification information that indicates the identified television channel to the server for subsequent computation of television rating points for the television channels

Other features and advantages of the disclosure will become apparent in the following detailed description of the embodiment(s) with reference to the accompanying drawings, of which:
FIG. 1 is a block diagram illustrating an exemplary system to implement an embodiment of a method for obtaining television rating points for television channels according to this disclosure; and
FIG. 2 is a flow chart illustrating steps of the embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

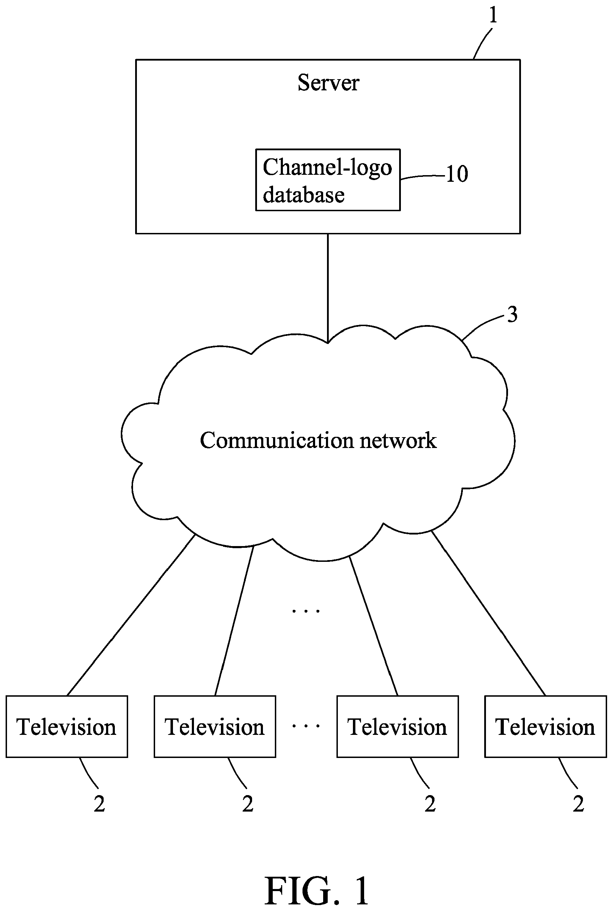

FIG. 1 illustrates an exemplary system to implement an embodiment of a method for obtaining television rating points for television channels according to this disclosure. The system includes a server 1, and a plurality of televisions 2 that are communicatively coupled to the server 1 via a communication network 3 (e.g., the Internet). The server 1 may belong to a TV service provider that provides TV programs to the televisions 2 via, for example but not limited to, set-top boxes (not shown) and communication buses or means such as Ethernet cables, coaxial cables, satellite dishes, telephone lines, power lines, antennas, etc. Typically, each TV channel corresponds to a unique channel logo, and, when a TV program is played on a TV channel, the corresponding channel logo will be embedded in the frames of the TV program so viewers can easily know what channel the TV program belongs to. Typically, the channel logo is located at a specific corner of the frames (e.g., an upper-right corner). The embodiment of this disclosure uses the channel logo in the frames to identify which channel is being viewed.

The server 1 includes a channel-logo database 10 that stores channel logo information. The channel logo information contains information related to multiple predefined channel logos respectively corresponding to multiple television channels. In practice, images of the predefined channel logos may be analyzed in advance using a conventional image analysis algorithm (e.g., edge detection), so as to generate a plurality of channel logo signatures each being a unique number corresponding to a respective one of the predefined channel logos. The channel logo signatures may serve as the channel logo information.

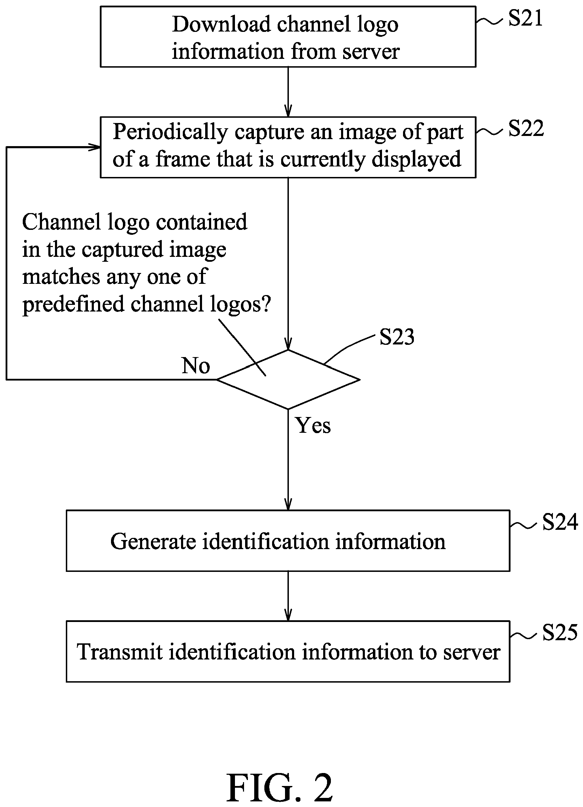

Each of the televisions 2 includes a processor (not shown) and a storage component (e.g., a hard disk drive, a solid state drive, a flash memory module, etc.; not shown) to perform the embodiment of the method for obtaining television rating points for television channels according to this disclosure, of which a flow chart is shown in FIG. 2. Since the televisions 2 should operate in similar manners in this embodiment, the following steps will be described with respect to a single television 2 for the sake of brevity.

In step S21, the television 2 downloads the channel logo information from the server 1, and stores the channel logo information in the storage component thereof.

In step S22, the television 2 periodically captures an image of part of a frame that is currently displayed thereby, and the image thus captured contains a channel logo contained in the part of the frame. Particularly, the part of the frame is positioned at a predetermined location (e.g., the upper-right corner) of the frame, so the television 2 may capture the image of only the predetermined location of the frame. It is noted that the term "part of a frame" may refer to the entire frame in some embodiments, and this disclosure is not limited in this respect.

In step S23, the television 2 determines whether the channel logo contained in the image matches any one of the predefined channel logos based on the channel logo information. The flow goes to step S24 when the determination is affirmative, and goes back to step S22 when otherwise. In practice, the television 2 may perform image analysis on the image captured thereby to obtain features of the channel logo contained in the image. The image analysis may be performed using the same image analysis algorithm used to generate the channel logo information, so as to generate a channel logo signature for the channel logo contained in the image, and the channel logo signature thus generated serves as the features of the channel logo contained in the image. Then, the television 2 compares the features of the channel logo (the channel logo signature generated in step S23) with the channel logo information (the channel logo signatures that are pre-established as the channel logo information) to determine whether the channel logo contained in the image matches any one of the predefined channel logos.

In step S24, the television 2 makes one of the television channels that corresponds to the matched one of the predefined channel logos serve as an identified television channel, records a moment (e.g., including date and time) at which the image of the part of the frame was captured, and generates identification information that indicates the identified television channel and the moment thus recorded.

In step S25, the television 2 transmits the identification information to the server 1 via the communication network 3.

After collecting the identification information from the televisions 2, the TV service provider may compute television rating points for the television channels. Specifically, the television rating points may be computed for the TV programs played on the television channels. Since each channel can only provide one television program at a time, television rating points may be computed for individual TV programs played on the television channels based on the identified television channel and the recorded moment contained in the identification information.

In summary, this disclosure proposes to perform image analysis on the channel logo in the frames of the television programs, so as to identify which channel is being viewed. The identification information can be used to compute television rating points for the television channels.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for obtaining television rating points for television channels, **characterized by**:
by a television (2), downloading (S21) channel logo information from a server (1) that is communicatively coupled to the television via a communication network (3), the channel logo information containing information related to multiple predefined channel logos that respectively correspond to multiple television channels;
by the television (2), periodically capturing (S22) an image of part of a frame that is currently displayed thereby, the image thus captured containing a channel logo contained in the part of the frame;
by the television (2), determining (S23) whether the channel logo contained in the image matches any one of the predefined channel logos based on the channel logo information; and
by the television (2), upon determining that the channel logo contained in the image matches one of the predefined channel logos, making one of the television channels that corresponds to the matched one of the predefined channel logos serve as an identified television channel, and transmitting (S25) identification information that indicates the identified television channel to the server (1) for subsequent computation of television rating points for the television channels.

2. The method of claim 1, **characterized by**:
by the television (2), after determining that the channel logo contained in the image matches one of the predefined channel logos, recording a moment at which the image of the part of the frame was captured, wherein the identification information further indicates the moment thus recorded.

3. The method of claim 1, **characterized in that** the part of the frame is positioned at a predetermined location of the frame.

4. The method of claim 1, **characterized in that** the determining (S23) whether the channel logo contained in the image matches any one of the predefined channel logos based on the channel logo information includes:
by the television (2), performing image analysis on the image captured thereby to obtain features of the channel logo contained in the image; and
by the television (2), comparing the features of the channel logo with the channel logo information to determine whether the channel logo contained in the image matches any one of the predefined channel logos.
